# EUROPÄISCHE PATENTANMELDUNG

(11) **EP 3 936 553 A1**
(43) Veröffentlichungstag der Anmeldung: **12.01.2022**
(21) Anmeldenummer: 21151868.3
(22) Anmeldetag: 15.01.2021
(51) Int. Cl.: C08G 65/336, C09D 171/02, C09D 183/04

(54) **2-KOMPONENTEN-BESCHICHTUNGSZUSAMMENSETZUNG ZUR BAUWERKSABDICHTUNG**

(30) Priorität: 07.07.2020 DE 102020117919
(71) Anmelder: FRANKEN SYSTEMS GmbH, 97258 Gollhofen (DE)
(72) Erfinder: Luckert, Sven, 97320 Sulzfeld (DE); Schmalstieg, Dr. Lutz, 97320 Sulzfeld (DE)
(74) Vertreter: Gleim, Christian Ragnar

(57) **Zusammenfassung**

2-Komponenten-Beschichtungszusammensetzung zur Bauwerksabdichtung umfassend eine Komponente A und eine Komponente B, wobei die Komponente A zumindest umfasst:
A1) eine polymere Verbindung der Formel
Y-[O-C=O-NH-CH₂-Si-R1a-R2₍₃₋ₐ₎]ₓ, wobei Y ein x-wertiger Polymerrest ist, wie er durch Entfernung der OH-Gruppen aus einem Polyetherpolyol entsteht und R1 eine Methylgruppe ist und R2 eine Methoxy- oder Ethoxygruppe ist und a gleich 0 oder 1 ist;
A2) anorganische und/oder organische Füllstoffe;
A3) Verbindungen, mit mindestens einer primären und/oder sekundären und/oder tertiären Aminogruppe und mit mindestens einer Alkoxysilylgruppe;
A4) Verbindungen der Strukturformel Rₓ-Si(OCH₃)₃, wobei Rₓ eine Vinyl- oder Phenylgruppe oder ein aus aus diesen Verbindungen abgeleitetes Oligomerisierungsprodukt ist;
A5) Alterungsschutzmittel;
und wobei die Komponente B zumindest einen flüssigen Katalysator ausgewählt aus der Gruppe der
B1) organischen Zinnverbindungen, und/oder
B2) organischen Titanverbindungen, und/oder
B3) Amine, und/oder
B4) Amidine, und/oder
B5) Guanidine
zur Beschleunigung der Silanpolykondensation umfasst.

## Beschreibung

Die Erfindung betrifft ein 2-Komponenten-Beschichtungszusammensetzung zur Bauwerksabdichtung gemäß dem unabhängigen Anspruch.

Die Abdichtung von Dachflächen, Balkonen und Terrassen mithilfe bituminöser oder polymerer Beschichtungsmaterialien ist gängige Praxis. Hierbei werden auf den Untergrund, der aus Holz, Metall oder Beton besteht, zunächst eine oder mehrere Isolierschichten aufgebracht und anschließend wird eine ein- oder mehrlagige Abdichtungsschicht aufgebracht. Diese Abdichtungsschicht besteht entweder aus polymeren oder bituminösen Abdichtungsfolien, die im Dach- und Anschlussbereich ausgelegt werden und an den Rändern und im Überlappungsbereich mit Klebdichtmassen, reaktiven Flüssigkunststoffen, Schmelzklebebändern, thermisch oder mit Quellschweißmittel miteinander verbunden werden.

Bei Flachdächern mit einer Vielzahl von Dachdurchdringungen und Neigung von weniger als 10% sowie zur Abdichtung von Balkonen und Terrassen werden besonders vorteilhaft reaktive Flüssigkunststoffe eingesetzt, die als flüssige, im wesentlichen lösemittelfreie Beschichtungs- und Abdichtungsmaterialien im Dachbereich aufgebracht werden und anschließend aushärten.

Reaktive Flüssigkunststoffe für die Bauwerksabdichtung, insbesondere zur Abdichtung von Flachdächern Balkonen und Terrassen sind in großer Anzahl im Markt. Diese basieren typischerweise auf ungesättigten Polyestern, Polyurethanen oder Acrylatcopolymeren. Geeignete polymere Abdichtungsmaterialien sind in der EOTA-Leitlinie ETAG Nr. 005 (Leitlinie für die europäische Technische Zulassung für flüssig aufzubringende Dachabdichtungen) genauer spezifiziert: Zum einen müssen die Massen dauerhaft, d.h. auch nach Alterung, hinreichend elastisch sein, um die durch Temperaturwechsel entstehenden Spannungen aufzufangen; zum anderen müssen die Beschichtungen mechanisch belastbar sein, um Undichtigkeiten infolge Durchstoßung, z.B. punktuelle Belastung mit hohem Druck oder durch herab fallende Gegenstände, zu vermeiden. Eine hinreichende Beständigkeit gegenüber mechanischer Beschädigung wird in der EOTA Leitlinie über einem weiten Temperaturbereich gefordert und muss durch Messung des Widerstandes gegenüber statischem und dynamischem Eindruck nachgewiesen werden. Andererseits wird in der Leitlinie aber auch eine dauerhafte Rissüberbrückung gefordert, die durch Messung der Reißdehnung nachgewiesen werden muss. Aufgrund dieses speziellen Anforderungsprofils und der geforderten Langzeitstabilität von mehr als 25 Jahren ist die Formulierung von derartigen Flüssigkunststoffen nicht einfach: die Formulierungen müssen aus ökologischen Gründen frei von flüchtigen organischen Lösemitteln sein und müssen signifikante Mengen an geeigneten Alterungsschutzmitteln enthalten, um der hohen Belastung durch UV-Strahlung zu widerstehen.

Als reaktive Flüssigkunststoffe können 1-komponentige feuchtigkeitshärtende Abdichtungsmassen auf Basis von silanterminierten Polymeren besonders vorteilhaft in der Bauwerksabdichtung eingesetzt werden. Entsprechende Produkte zeichnen sich durch eine einfacher Verarbeitbarkeit, gute mechanische Eigenschaften sowie toxikologische Unbedenklichkeit aus. Aufgrund der ausgezeichneten Haftung zu nahezu allen Untergründen des Baubereiches werden diese Produkte besonders vorteilhaft als Detailabdichtung in Anschlussbereichen zu polymeren oder bituminösen Abdichtungsbahnen- oder -Folien eingesetzt. Auf dieser Technologie basierende Materialien und ihre Verwendung als Abdichtungsmaterialien für Dachbeschichtungen sind z.B. aus EP-A 1 987 108, EP-A 2 352 776 und EP-A 2 561 024 sowie der WO 2019 114990 A1 bekannt.

1-Komponentige Abdichtungsmassen auf Basis von silanterminierten Polymeren härten unter Einfluss von Feuchtigkeit aus der Umgebungsluft oder aus dem Untergrund durch Silanpolykondensation aus. Dieser Prozess erfolgt Diffusionskontrolliert, wobei die Dauer der vollständigen Aushärtung abhängig ist von der Luftfeuchtigkeit, von der Untergrundfeuchtigkeit, von der Wasserdampfdurchlässigkeit der Beschichtungsformulierung sowie von der applizierten Schichtdicke. Die Geschwindigkeit der Aushärtung ist demzufolge prinzipiell limitiert, zumal größere Mengen an Katalysatoren, die die Silanpolykondensation beschleunigen, lediglich die Lagerstabilität verschlechtern, aber nicht zu einer beschleunigten Aushärtung verhelfen.

Bei Betrachtung der vielfältigen Faktoren, die die Dauer der vollständigen Aushärtung beeinflussen, wird deutlich, dass Bedarf für Abdichtungsmassen auf Basis silanterminierter Polymere besteht, welche unabhängig von der Umgebungsfeuchtigkeit in beliebiger Schichtdicke schnell und zuverlässig aushärten.

Aufgabe der vorliegenden Erfindung ist daher die Bereitstellung verbesserter Beschichtungszusammensetzungen zur Bauwerksabdichtung auf Basis silanterminierter Polymere.

Diese Aufgabe wird durch eine 2-Komponenten-Beschichtungszusammensetzung gemäß den Ansprüchen gelöst.

Die Erfindung umfasst eine 2-Komponenten-Beschichtungszusammensetzung zur Bauwerksabdichtung umfassend eine Komponente A und eine Komponente B, wobei die Komponente A zumindest umfasst:
A1) eine polymere Verbindung der Formel
   Y-[O-C=O-NH-CH₂-Si-R1ₐ-R2₍₃₋ₐ₎]ₓ, wobei Y ein x-wertiger Polymerrest ist, wie er durch Entfernung der OH-Gruppen aus einem Polyetherpolyol entsteht und R1 eine Methylgruppe ist und R2 eine Methoxy- oder Ethoxygruppe ist und a gleich 0 oder 1 ist;
A2) anorganische Füllstoffe;
A3) Verbindungen, mit mindestens einer primären und/oder sekundären und/oder tertiären Aminogruppe und mit mindestens einer Alkoxysilylgruppe;
A4) Verbindungen der Strukturformel Rₓ-Si(OCH₃)₃, wobei Rₓ eine Vinyl- oder Phenylgruppe oder ein aus diesen Verbindungen abgeleitetes Oligomerisierungsprodukt ist;
A5) Alterungsschutzmittel;
und wobei die Komponente B zumindest einen flüssigen Katalysator ausgewählt aus der Gruppe der
B1) organischen Zinnverbindungen, und/oder
B2) organischen Titanverbindungen, und/oder
B3) Amine, und/oder
B4) Amidine, und/oder
B5) Guanidine
zur Beschleunigung der Silanpolykondensation umfasst.

Die Erfindung beruht auf der überraschenden Beobachtung, dass durch die Mitverwendung von Weichmachern in Abdichtungsmassen auf Basis von silanterminierten Polymeren die Bewitterungsstabilität unter UV- und Feuchtigkeitsbelastung nachteilig beeinflusst wird.

2-Komponenten-Abdichtungsmassen auf Basis silanterminierter Polymere sind seit langer Zeit bekannt und sind gängiger Stand der Technik: so beschreiben beispielsweise die EP 2894199 A1, die EP 2682432 A1 oder die EP 1650261 A1 Dichtmassen auf Basis silanterminierter Polyether, die als 1- oder 2-Komponentensysteme zu formulieren sind: im Fall einer 2-Komponentenformulierung enthält die erste Komponente das silanterminierte Polymer, Additive und Füllstoffe, die zweite Komponente enthält den Katalysator für die Silan-Polykondensation, Weichmacher, Wasser und Füllstoff. Bei den silanterminierten Polyethern dieser Veröffentlichungen handelt es sich aber um Polymere, die sich strukturell wesentlich von den erfindungsgemäß einzusetzenden Polymeren unterscheiden und eine wesentlich niedrigere Reaktivität aufweisen und daher eine lange Aushärtungszeit benötigen.

2-Komponenten-Abdichtungsmassen werden darüber hinaus in der EP 2220163 B1 beschrieben: hier enthält die erste Komponente spezielle silanterminierte Polyurethane und die zweite Komponente Weichmacher, Wasser und Tenside. Die im Rahmen dieser Veröffentlichung einzusetzenden silanterminierten Polyurethane unterscheiden sich strukturell wesentlich von den erfindungsgemäß einzusetzenden Polymeren, sind vergleichsweise aufwendig herzustellen und weisen eine geringere Reaktivität und eine hohe Viskosität auf, so dass sie nur unter Verwendung von größeren Mengen an Katalysatoren und Weichmachern formuliert werden können. Bevorzugt werden in den 2K-Systemen der EP 2220163 B1 5 bis 15 Gew% Weichmacher in der A-Komponente und 20 bis 60 Gew% Weichmacher in der B-Komponente verwendet. Der vergleichsweise hohe Anteil an Weichmacher ist bei diesen Produkten durch die Applikation aus 2K-Kartuschensystemen mit Statikmischern zwangsläufig erforderlich, da derartige Kartuschensysteme bestenfalls im Mischungsverhältnis 10:1 zuverlässig mischen.

In der WO 2019 114990 A1 werden 1-Komponenten-Beschichtungszusammensetzungen beschrieben, die prinzipiell mit der nachstehend näher charakterisierten, erfindungsgemäß zu verwendenden Komponente A vergleichbar sind, wobei sich dort auch ein Hinweis auf die Möglichkeit zur Formulierung von 2-Komponenten-Systemen findet, wobei die zweite Komponente aus Wasser oder anderen OH-haltigen Verbindungen besteht. Darüber hinaus beschreibt die WO 2019 114990 A1 konkret die Mitverwendung größerer Mengen an Weichmachern, ohne aber deren nachteilige Wirkung auf das Alterungsverhalten zu beschreiben. Der Lehre der WO 2019 114990 A1 sind demzufolge keinerlei Hinweise auf die negativen Einflüsse von Weichmachern auf das Alterungsverhalten der Beschichtungszusammensetzungen zu entnehmen, wobei auch keinerlei Hinweise auf konkrete Möglichkeiten zur Formulierung von 2-Komponentensystemen enthalten sind.

Im Rahmen der vorliegenden Erfindung wurde die überraschende Beobachtung gemacht, dass nennenswerte Mengen an Weichmachern, d.h. Mengen von mehr als 5 Gew% bezogen auf das Gesamtgewicht der Komponente A das Alterungsverhalten negativ beeinflussen. Daher enthalten die erfindungsgemäßen Beschichtungszusammensetzungen weniger als 5 Gew% an Weichmachern, bevorzugt weniger als 3 Gew%.

Im Rahmen der Erfindung einsetzbar als Komponente A1 sind Umsetzungsprodukte von Polyoxyalkylenpolyolen, vorzugsweise Polyoxypropylenpolyolen, besonders bevorzugt Polyoxypropylendiolen eines mittleren Molekulargewichts Mn von 2000 bis 30000 g/mol, vorzugsweise 4000 bis 20000 g/mol mit Alpha-Isocyanatosilanen der allgemeinen Formel

O=C=N-CH₂-Si-R1ₐ-R2₍₃₋ₐ₎

wobei R1 für eine Methylgruppe und R2 für eine Methoxy- oder eine Ethoxygruppe steht und a= 0 oder 1 ist.

Bevorzugt ist a = 0 und R2 steht für eine Ethoxygruppe, besonders bevorzugt ist a=1 und R1 steht für eine Methylgruppe und R2 für eine Methoxygruppe. Derartige silanterminierte Polymere A1 zeichnen sich durch eine besonders hohe Reaktivität gegenüber Feuchtigkeit aus und können mit sehr geringen Mengen der nachstehend beispielhaft genannten Katalysatoren zur schnellen Aushärtung mit Luftfeuchtigkeit gebracht werden.

Im Rahmen der Erfindung als Komponente A2 einsetzbar sind anorganische Füllstoffe des Standes der Technik. Beispiele für Füllstoffe A2 sind nicht verstärkende Füllstoffe, also Füllstoffe mit einer BET-Oberfläche von vorzugsweise bis zu 50 m²/g, wie Quarz, Diatomeenerde, Calciumsilikat, Zirkoniumsilikat, Talkum, Kaolin, Zeolithe, Metalloxidpulver, wie Aluminium-, Magnesium-, Titan-, Eisen- oder Zinkoxide bzw. deren Mischoxide, Bariumsulfat, Calciumcarbonat, Mischkristalle aus Kaolin und Quarz oder auch verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET- Oberfläche oder Aluminiumtrihydroxid. Die genannten Füllstoffe können hydrophobiert sein, beispielsweise durch die Behandlung mit Organosilanen bzw. -siloxanen oder mit Fettsäuren oder durch Veretherung von Hydroxylgruppen zu Alkoxygruppen.

Bevorzugt handelt es sich bei den erfindungsgemäß einzusetzenden Füllstoffen A2 um Calciumcarbonat, Talkum, Aluminiumhydroxid, Kieselsäure und/oder Titandioxid in der Rutil-Form, wobei der Einsatz von Aluminiumhydroxid besonders bevorzugt wird, da dieser Füllstoff zudem eine brandhemmende Wirkung besitzt. Bevorzugte Calciumcarbonat-Typen sind gemahlen oder gefällt und gegebenenfalls oberflächenbehandelt mit Fettsäuren wie Stearinsäure oder deren Salzen. Bei der bevorzugten Kieselsäure handelt es sich bevorzugt um pyrogene Kieselsäure.

Die eingesetzten Füllstoffe A2 haben typischerweise einen Feuchtigkeitsgehalt von weniger als 1 Gew.-% bezogen auf das Gewicht des Füllstoffs, bevorzugt weniger als 0,5 Gew.-%.

In untergeordneten Mengen weiterhin einsetzbar als Füllstoffe A2 sind organische oder anorganische Fasern, wie beispielsweise Glasfasern, Kohlefasern oder Kunststofffasern, wie beispielsweise Polyester-, Polyamid-, Aramid- oder Polyacrylatfasern sowie Metallfasern oder Fasern mit metallischen Bestandteilen.

Als Komponente A3 erfindungsgemäß einsetzbar sind Verbindungen, die mindestens eine primäre, sekundäre oder tertiäre Aminogruppe und mindestens eine Alkoxysilylgruppe aufweisen. Erfindungsgemäß einsetzbar sind an sich bekannte Aminosilan-Verbindungen der allgemeinen Strukturformel

NHY-(CH2)_{b}-SiR1ₐ-R2₍₃₋ₐ₎

worin R1, R2 und a die vorstehend genannte Bedeutung haben, b für 1 oder 3 steht und Y für ein Wasserstoffatom, für einen Alkylrest, einen Cycloalkylrest, einen Arylrest oder einen Aminoalkylrest steht; a ist vorzugsweise 0 und R2 steht vorzugsweise für eine Methoxygruppe, b steht vorzugsweise für 3.

Beispiele für bevorzugt als Komponente A3 einsetzbare Aminosilanverbindungen sind 3-Aminopropyltrimethoxysilan, 3-Aminopropyltriethoxysilan, N-Aminoethyl-3-aminopropyltrimethoxysilan, N-Aminoethyl-3-aminopropyltriethoxysilan, N-Aminoethyl-3-aminopropyl-methyldimethoxysilan,N-Methyl-3-aminopropyltrimethoxysilan, N-Cyclohexyl-3-aminopropyltrimethoxysilan, N-Butyl-3-aminopropyltrimethoxysilan, N-Phenyl-3-aminopropyltrimethoxysilan, N-Cyclohexyl-3-aminopropyl-methyldimethoxysilan sowie Oligomerisierungsprodukte dieser Aminosilanverbindungen. Besonders bevorzugt einsetzbare Aminosilanverbindungen enthalten mindestens eine primäre Aminogruppe und Methoxysilylgruppen. Beispiele für besonders bevorzugt einsetzbare Aminosilanverbindungen sind 3-Aminopropyltrimethoxysilan, N-Aminoethyl-3-aminopropyltrimethoxysilan, N-Aminoethyl-3-aminopropyl-methyldimethoxysilan.

Die Aminosilan-Verbindungen der Komponente A3 wirken im Rahmen der Komponente A gleichzeitig als Härtungskatalysator und als Haftvermittler.

Im Rahmen der Erfindung einsetzbar als Komponente A4 sind Verbindungen der allgemeinen Strukturformel Rx-Si(OCH3)3, worin Rx für eine Vinyl- oder eine Phenylgruppe steht sowie deren Oligomerisierungsprodukte. Diese Verbindungen besitzen eine besonders erhöhte Reaktivität gegenüber Feuchtigkeit und werden demzufolge zur Trocknung der anorganischen Füllstoffkomponenten A2 im Rahmen des Herstellprozesses und zur Verbesserung der Lagerstabilität der Komponente A eingesetzt. Bevorzugt wird als Komponente A4 Vinyltrimethoxysilan eingesetzt.

Im Rahmen der Erfindung einsetzbar als Komponente A5 werden die bekannten Kunststoffstabilisatoren des Standes der Technik eingesetzt. Hierbei handelt es sich insbesondere um Antioxidationsmittel, UV-Absorber und Radikalfänger vom Typ der gehinderten Amin-Lichtstabilisatoren -HALS-. Bevorzugt werden Kombinationen der genannten Stabilisatortypen eingesetzt. Besonders bevorzugt werden höhermolekulare, oligomere oder polymere Stabilisatoren der genannten Typen als Alterungsschutzmittel verwendet, wobei derartige höhermolekulare Stabilisatoren auch mehrere Stabilisatortypen in sich vereinen können. Eine Zusammenfassung der Thematik der Alterungsschutzmittel findet sich in der WO 2019 114990 A1, die diesbezüglich vollumfänglich in den Gegenstand der vorliegenden Erfindung einbezogen wird.

Als Antioxidationsmittel seien beispielhaft sterisch gehinderte Phenole genannt, deren Struktur sich vom 2,6-Di-tert.-butyl-4-methylphenol ableitet. Beispiele für entsprechende Handelsprodukte sind Irganox 1135, Irganox 1076, Irganox 1010, Irganox 1098, Irganox 5057, Hostanox O3, Sumilizer GA80, Irganox 3790.

Als UV-Absorber seien Verbindungen vom Benzotriazol-Typ und Verbindungen vom Triazin-Typ beispielhaft genannt. Beispiele für entsprechende Handelsprodukte sind Tinuvin P, Tinuvin 213,Tinuvin 326, Tinuvin 327, Tinuvin 328, Tinuvin 329, Tinuvin 571, Milestab 1174, oder Milestab1577.

Als gehinderte Amin-Lichtstabilisatoren -HALS- werden Verbindungen bezeichnet, deren Grundstruktur sich vom 2,2,6,6-Tetramethylpiperidin ableitet. Beispiele für entsprechende Handelsprodukte sind Tinuvin 770, Tinuvin 123, Tinuvin 765, Tinuvin 622, Tinuvin144, Cyasorb UV3853, Cyasorb UV3622, Milestab 4050, Hostavin N30, Chimasorb 944, Chimasorb 119.

Im Rahmen der Erfindung optional einsetzbar als Komponente A6 sind die dem Fachmann aus der Beschichtungstechnologie bekannten Hilfs- und Zusatzmittel. Dies sind zum einen Formulierungshilfsmittel wie Entlüfter, Entschäumer und Netz- und Dispergieradditive sowie Rheologiehilfsmittel, zum anderen Haftvermittler, insbesondere solche aus der Gruppe der funktionellen Silane, wie beispielsweise Epoxysilane, Carbamatosilane, Isocyanuratosilane, Acryloxysilane oder Methaycryloxysilane.

Weiterhin optional einsetzbar im Rahmen der Komponente A6 sind untergeordnete Mengen an organischen Lösemitteln und/oder Weichmachern, d.h. bis zu maximal 5 Gew%, vorzugsweise bis zu maximal 3 Gew% bezogen auf das Gesamtgewicht der Komponenten A und B einsetzbar. Als organische Lösemittel seien an dieser Stelle Ethylacetat, Butylacetat, Methoxypropylacetat, Methylethylketon, Methylisobutylketon, Toluol, Xylol, aromatische oder (cyclo-)aliphatische Kohlenwasserstoffgemische oder beliebigen Gemische derartiger Lösungsmittel genannt.

Als Weichmacher optional einsetzbar im Rahmen der Komponente A6 sind die an sich bekannten Weichmacher ausgewählt aus der Gruppe der Phosphorsäureester, der Sulfonsäureester oder der aromatischen und/oder aliphatischen Carbonsäureester. Weiterhin einsetzbar sind hochsiedende aliphatische und/oder aromatische Kohlenwasserstoffgemische. Die Mitverwendung derartiger Weichmacher ist weniger bevorzugt, da die Langzeitstabilität der Bauwerksabdichtung durch deren Mitverwendung deutlich negativ beeinflusst wird. Als Weichmacher im Rahmen der Komponente A6 mitverwendbar sind weiterhin Polyetherpolyole, insbesondere Polypropylenoxid-Polyether eines Molekulargewichtes von vorzugsweise 1000 bis 12000 g/mol. Im Rahmen der vorliegenden Erfindung konnte gezeigt werden, dass die Mitverwendung derartiger Weichmacher in Mengen von maximal 5 Gew%, vorzugsweise maximal 3 Gew% bezogen auf das Gesamtgewicht der Komponenten A und B das mechanische Verhalten und das Alterungsverhalten nicht negativ beeinflusst.

Im Rahmen der Komponente 6 können weiterhin reaktive Verdünner erfindungsgemäß mitverwendet werden, entsprechend der Lehre der WO 2019 114990 A1, die diesbezüglich vollumfänglich in den Gegenstand der vorliegenden Erfindung einbezogen wird. Beispiele für geeignete reaktive Verdünner sind insbesondere n-Alkyl-trialkoxysilylverbindungen, deren Alkylgruppe mindestens 8 Kohlenstoffatome aufweist, wie Isooctyltrimethoxysilan, Isooctyltriethoxysilan, n-Octyltrimethoxysilan, n-Octyltriethoxysilan, n-Decyltrimethoxysilan, n-Decyltriethoxysilan, n- Dodecyltrimethoxysiloan, n-Dodecyltriethoxysilan, n-Tetradecyltrimethoxysilan, n-Tetradecyltriethoxysilan, n-Hexadecyltrimethoxysilan, n-Hexadecyltriethoxysilan sowie n- Octadecyltriethoxysilan. Die Mitverwendung derartiger Silane vermindert die Wasseraufnahme der ausgehärteten Beschichtungen, was sich positiv auf die Langzeitstabilität auswirkt. Die Mitverwendung von Verbindungen der allgemeinen Strukturformel

R_{y}-Si(OCH₃)₃

in Mengen von bis zu 25 Gew% bezogen auf das Gesamtgewicht der Komponente A ist bevorzugt, wobei Ry für einen Alkylrest mit mindestens 10 Kohlenstoffatmen steht.

Im Rahmen der Komponente A6 können weiterhin flüssige Silikonharze erfindungsgemäß mitverwendet werden, entsprechend der Lehre der WO 2019 114990 A1, die diesbezüglich vollumfänglich in den Gegenstand der vorliegenden Erfindung einbezogen wird. Vorzugsweise besitzen die erfindungsgemäß gegebenenfalls einzusetzenden Siliconharze eine mittlere Molmasse (Zahlenmittel) Mn von ca. 600 g/mol bis ca. 3000 g/mol, sind lösemittelfrei und weisen eine Viskosität von maximal 20000 mPas bei 23°C auf.

Die Herstellung der Komponente A erfolgt in einer dem Fachmann bekannten Art unter Einsatz geeigneter Mischaggregate nach Methoden und Verfahren wie sie zur Herstellung von feuchtigkeitshärtenden Zusammensetzungen üblich sind durch Zugabe der einzelnen Bestandteile der Komponente A in beliebiger Reihenfolge und Vermischen.

Dieses Vermischen kann bei Raumtemperatur unter Normaldruck erfolgen oder aber bei erhöhter Temperatur im Bereich von bis zu 120°C. Weiterhin kann es vorteilhaft sein, zeitweilig oder ständig unter vermindertem Druck zu mischen, wie z.B. bei 30 bis 500 hPa Absolutdruck, um flüchtige Verbindungen und/oder Luft zu entfernen. Die Herstellung der Komponente A kann dabei grundsätzlich in diskontinuierlichen und kontinuierlichen Verfahren erfolgen. Zur Herstellung der Komponente A können auch Vormischungen einzelner Komponenten hergestellt und diese dann miteinander vermischt werden.

Typischerweise enthält die Komponente A folgende Mengenverhältnisse bezogen auf das Gesamtgewicht der Komponente A:
- 30 bis 65 Gew%, vorzugsweise 40 bis 55 Gew% an polymerer Verbindung A1
- 25 bis 55 Gew%, vorzugsweise 30 bis 45 Gew% an anorganischen Füllstoffen A2
- 0,2 bis 2,5 Gew%, vorzugsweise 0,5 bis 2 Gew% an Amino- und Alkoxysilylgruppen aufweisenden Verbindungen A3
- 1 bis 6 Gew%, vorzugsweise 1,5 bis 5 Gew% an Vinyl- und/oder Phenyltrimethoxysilylverbindungen A4
- 1,5 bis 7,5 Gew%, vorzugsweise 2,5 bis 5 Gew% an Alterungsschutzmittel A5
- 0 bis 25 Gew%, vorzugsweise 1 bis 15 Gew% an Hilfs- und Zusatzmitteln A6, mit der Maßgabe, dass organische Lösemittel und/oder Weichmacher in Mengen von maximal 5 Gew%, vorzugsweise maximal 3 Gew%, bezogen auf das Gesamtgewicht der Komponente A eingesetzt werden.

Die Komponente A enthält somit alle wesentlichen Bestandteile einer 1-Komponenten-Beschichtungs-zusammensetzung und ist als feuchtigkeitshärtendes Abdichtungssystem im Sinne der EOTA-Leitline ETAG 005 problemlos einzusetzen.

Wesentlicher Bestandteil der Komponente B sind Katalysatoren, welche die Silanpolykondensation beschleunigen. Hierbei kann es sich grundsätzlich um beliebige, bisher bekannte Katalysatoren für durch Silanpolykondensation härtende Massen handeln, die auch im Gemisch eingesetzt werden können.

Beispiele für metallhaltige Härtungskatalysatoren B1 sind organische Zinnverbindungen wie beispielsweise Dibutylzinndilaurat , Dibutylzinnmaleat , Dibutylzinndiacetat , Dibutylzinndioctanoat , Dibutylzinnacetylacetonat, Dibutylzinnoxide , und entsprechende Dioctylzinnverbindungen.

Beispiele für metallhaltige Härtungskatalysatoren B2 sind organische Titanverbindungen, insbesondere Ester der Titansäure wie beispielsweise Tetrabutyltitanat , Tetrapropyltitanat , Tetraisopropyltitanat und Titantetraacetylacetonat.

Selbstverständlich können auch Gemische der genannten Katalysatoren B1 und/oder B2 verwendet werden. Innerhalb der Gruppe der metallhaltigen Härtungskatalysatoren B1 und B2 ist die Verwendung von Dibutylzinnacetylacetonat bevorzugt, da dieser Metallkatalysator von allen konkret benannten Katalysatoren die höchste katalytische Wirksamkeit zeigt und demzufolge in sehr geringen Konzentrationen zur Anwendung gebracht werden kann.

Beispiele für aminische Härtungskatalysatoren B3 sind basische Aminverbindungen mit tertiären Aminogruppen, die sich durch eine vergleichsweise starke Basizität auszeichnen. Beispielhaft genannt seien Triethylamin, Tributylamin, N,N-Dimethylethanolamin, Aminoethylpiperazin,1,4- Diazabicyclo [2,2,2] octan, N-Bis- (N, N-dimethyl-2 - aminoethyl)- methylamin, N, N-Dimethylcyclohexylamin, N,N'-Dimethylpiperazin, Bis-2-dimethylaminoethyl-ether, N-Alkylmorpholine wie beispielsweise N-Ethylmorpholin oder Dimorpholinodiethylether oder Aminopropylmorpholin, N,N-Dialkylpropylamine wie beispielsweise N,N-Diethyl-1,3-diamionopropan. Selbstverständlich können auch Gemische dieser aminischen Härtungskatalysatoren erfindungsgemäß in der Komponente B eingesetzt werden. Besonders vorteilhaft einsetzbar als Härtungskatalysatoren B3 sind Metallkomplexe mit Aminen, besonders bevorzugt Zink-Amin-Komplexverbindungen, ganz besonders bevorzugt sind Zink-Komplexe von N,N-Diethyl-1,3-diaminopropan.

Beispiele für Amidin-Katalysatoren B4 sind insbesondere cyclische Amidine wie 5 - Diazabicyclo [4.3.0] non-5-en,1 oder 8 -Diazabicyclo [5.4.0] undec-7-en.

Als Guanidin-Katalysatoren B5 sind allgemein alle N-Alkyl oder N-Aryl-substituierte Katalysatoren mit Guanidinstruktur geeignet. Beispielhaft genannt seien an dieser Stelle Tetramethylguanidin, N,N'-Diphenylguanidin, N,N'-Di-o-Tolylguanidin oder 1-o-Tolylbiguanid

In einer bevorzugten Ausführungsform der vorliegenden Erfindung werden keine Katalysatoren der Gruppen B1 und B2 verwendet, also nur Katalysatoren der Gruppen B3, B4 oder B5 gegebenenfalls in Form von Gemischen. Besonders bevorzugt werden ausschließlich Katalysatoren der Gruppe B3 eingesetzt.

In den erfindungsgemäßen Beschichtungszusammensetzungen werden die Katalysatoren B in Mengen von 0,01 bis 1 Gewichtsteilen, bevorzugt 0,05 bis 0,5 Gewichtsteilen bezogen auf 100 Gewichtsteile der Komponente A eingesetzt.

Neben den Katalysatoren B1 bis B5 enthält die Komponente B vorzugsweise Wasser in einer Menge, die stöchiometrisch für eine quantitative Silanpolykondensation ausreicht. Dabei beträgt die Menge Wasser typischerweise 0,02 Gew% bis 0,3 Gew%, vorzugsweise 0,05 Gew% bis 0,25 Gew% bezogen auf das Gesamtgewicht der Komponente A.

Im bevorzugten Fall, wenn also die Komponente B neben den Katalysatoren B1 bis B5 zusätzlich Wasser enthält, ist es erfindungswesentlich, dass die Komponente B als homogene Lösung eingesetzt wird. Im Fall wasserunlöslicher Katalysatoren ist es erforderlich, dass die Komponente B zusätzlich einen Lösungsvermittler für die Katalysatoren B1 bis B5 und das Wasser enthält. Dies können geringe Mengen polar-protischer oder polar aprotischer Lösemittel der bekannten Art sein. Vorteilhaft einzusetzen sind in diesem Zusammenhang niedermolekulare oder höhermolekulare, ein- oder mehrwertige Alkohole. Besonders bevorzugt einsetzbar als Lösungsmittel sind ethoxylierte- und/oder propoxylierte Alkohole eines Molekulargewichts von bis zu 2000g/mol. Die Lösungsmittel werden in einer Menge von weniger als 5 Gew%, bevorzugt weniger als 2 Gew% bezogen auf das Gesamtgewicht der Komponenten A und B eingesetzt, um nachteilige Auswirkungen auf die mechanischen Eigenschaften und das Alterungsverhalten zu vermeiden.

Somit ist es erfindungswesentlich, dass in den erfindungsgemäßen 2-Komponenten-Beschichtungs-zusammensetzungen sowohl in der A-Komponente, als auch in der B-Komponente mindestens ein Katalysator enthalten ist, welcher die Silanpolykondensation beschleunigt. Dies ist in der Komponente A die Komponente A3 und in der Komponente B Verbindungen ausgewählt aus den Gruppen B1 bis B5, vorzugsweise der Gruppe B3. Im Rahmen der vorliegenden Erfindung hat sich gezeigt, dass derartige 2-Komponenten-Beschichtungszusammensetzungen ausgesprochen tolerant gegenüber Mischungsfehlern sind.

In der erfindungsgemäßen 2-Komponenten-Beschichtungszusammensetzung werden die Komponenten A und B unmittelbar vor der Applikation vermischt. Hierbei ist es erfindungswesentlich, dass vergleichsweise geringe Mengen der Komponente B in die Komponente A eingemischt werden. Das Mischungsverhältnis A:B beträgt hierbei1000:1 bis 20:1, vorzugsweise 500:1 bis 50:1. Das Mischen kann durch einfaches Verrühren der Komponenten A und B von Hand und unter Baustellenbedingungen erfolgen. Besonders vorteilhaft wird eine geringe Menge der Komponente B der Komponente A zugesetzt und die Mischung wird durch einfaches Verrühren homogenisiert. Besonders vorteilhaft werden die Komponenten A und B in Gebindegrößen konfektioniert, die den vorgegebenen Mischungsverhältnissen entsprechen. Die erfindungsgemäßen 2-Komponenten-Beschichtungszusammensetzung haben einerseits eine vergleichsweise lange Verarbeitungszeit von bis zu 15 bis 30 Minuten, härten andererseits aber innerhalb kurzer Zeit von ca. 60 bis 90 Minuten in beliebiger Schichtstärke zuverlässig aus.

Gegenstand der vorliegenden Erfindung ist auch ein Verfahren zur Bauwerksabdichtung mittels gewebearmierter Beschichtung. Die im erfindungsgemäßen Verfahren einzusetzenden 2-Komponenten-Beschichtungssysteme (Beschichtungszusammensetzungen) werden bei der Abdichtung von Bauwerken grundsätzlich in Kombination mit einem textilen Flächengebilde appliziert. Mit diesem Begriff sind alle gewirkten, gestrickten, gewebten, geflochtenen, gehäkelten oder auf sonstige Art aus Garnen oder Fasern hergestellten Flächengebilde gemeint. Geeignete textile Flächengewebe basieren auf organischen oder anorganische Fasern, wie beispielsweise Glasfasern, Kohlefasern oder Kunststofffasern, wie beispielsweise Polyester-, Polyamid-, Aramid- oder Polyacrylatfasern, Metallfasern oder Fasern mit metallischen Bestandteilen o. dgl.. Vorzugsweise werden Vliesmaterialien eingesetzt wie beispielsweise Glasfaservliese oder Polyestervliese. Vorzugsweise werden die Flächengebilde, insbesondere in Form von Polyestervliesen, mit einem Flächengewicht von 50 bis 300 g/m² oder 75 bis 250 g/m², besonders bevorzugt 110 bis 165 g/m² im erfindungsgemäßen Verfahren eingesetzt. Hierdurch ist für viele Anwendungsfälle eine besondere Verstärkung bei gleichzeitig sehr geringer Ablaufneigung gegeben. Das erfindungsgemäße Verfahren wird besonders vorteilhaft zur Ausbildung von Dehn- und Arbeitsfugen genutzt, insbesondere zur Ausbildung von Dehn- und Arbeits- und Sollrissfugen, insbesondere bei Konstruktionen mit Beton-Fertigbauteilen.

Die im erfindungsgemäßen Verfahren einzusetzenden 2-Komponenten-Beschichtungssysteme werden vorzugsweise unmittelbar vor der Verarbeitung gemischt und härten bei den im Baubereich üblichen Umgebungstemperaturen, insbesondere ca. 23°C, innerhalb einer Zeit von nur 60 Minuten aus. Im bevorzugten Fall, dass die Komponente B Wasser enthält, erfolgt die Durchhärtung in dieser Zeit auch in hohen Schichtstärken von bis zu 10 mm. Die Verarbeitung erfolgt dabei typischerweise so, dass der abzudichtende Teil eines Bauwerks zunächst mit dem vorgemischten 2-Komponenten-Beschichtungssystem beschichtet wird, bspw. durch Streichen, Rollen oder Rakeln, dann wird das textile Flächengebilde wie z. B. ein Vlies in das aufgetragene Beschichtungssystem eingelegt und abschließend wird das Flächengebilde mit dem Beschichtungssystem beispielsweise durch Streichen, Rollen oder Rakeln in innigen Kontakt gebracht. Hierbei wird das Flächengebilde vorzugsweise so überarbeitet, dass dieses vollständig mit dem reaktiven Beschichtungssystem durchtränkt ist und sich besonders bevorzugt darüber hinaus eine homogene Oberflächenstruktur ergibt. Gegebenenfalls kann nochmals Beschichtungszusammensetzung aufgebracht werden, um eine gleichmäßigere Oberfläche zu erzeugen.

Die Applikation erfolgt zumeist so, dass ca. 2-10 kg, bevorzugt 2-5 kg, besonders bevorzugt 2,5kg bis 3,5kg Beschichtungssystem pro Quadratmeter zu beschichtender Fläche appliziert werden. Die Applikation erfolgt zumeist derart, dass in Kombination mit dem textilen Flächengebilde wie insbesondere Vlies eine Beschichtungsdicke von mindestens 2 mm, typischerweise von 2 bis 5 mm oder vorzugsweise 2,2 mm bis 3,5 mm resultiert (bezogen auf die Gesamtschichtdicke).

Dabei ist es besonders vorteilhaft, dass das erfindungsgemäß zu verwendende Abdichtungssystem eine ausgezeichnete Haftung zu allen im Baubereich üblichen Substraten aufweist, insbesondere zu Beton sowie Dachbahnen auf Polymer- oder Bitumenbasis einerseits und zu sich selbst andererseits. Somit ist eine Grundierung des Substrates vor dem Auftrag des im erfindungsgemäßen Verfahren zu verwendenden Reaktivsystems vielfach nicht notwendig. Das im erfindungsgemäßen Verfahren einzusetzende Reaktivsystem kann sogar auf frischen, hoch-alkalischen Beton bzw. auf restfeuchten Beton aufgebracht werden. Aufgrund des hohen spezifischen Gewichts weist die erfindungsgemäß zu verwendende Abdichtungsmasse ein hohes Penetrationsvermögen auf und dichtet unter eventuell vorhandenen Wasserlagen das Substrat, beispielsweise den Beton, ab.

Wie bereits vorstehend ausgeführt, weist das im erfindungsgemäßen Verfahren zu verwendende Reaktivsystem auch eine gute Haftung zu sich selbst auf. Mithin ist es möglich, mehrere Schichten der erfindungsgemäß zu verwendenden Abdichtungsmasse übereinander aufzubringen, wobei zwischen den verschiedenen Aufbringungsvorgängen die jeweils zuvor aufgebrachte Abdichtungsmasse bereits ausgehärtet sein kann. Diese Eigenschaft ist von großem Vorteil, da bei großen Substraten, beispielsweise Gebäudewänden oder Dachflächen, die Beschichtung ggf. nicht in einem Zuge aufgebracht werden kann, sondern über mehrere Tage verteilt aufgebracht werden muss. Dies stellt aufgrund der guten Haftung der im erfindungsgemäßen Verfahren zu verwendenden Reaktivsysteme zu sich selbst kein Problem dar, so dass auch in den Anschlussbereichen eine lückenlose Abdichtung erfolgt, wobei die nachfolgend aufgetragene Abdichtungsmasse zum einen zuverlässig an den Untergrund, beispielsweise Beton, als auch an die bereits aufgebrachte und ausgehärtete Abdichtungsmasse anhaftet und aushärtet.

Vor der Applikation der im erfindungsgemäßen Verfahren aufzubringenden Abdichtung kann das Aufbringen einer Grundierung in speziellen Fällen vorteilhaft sein. Hierbei hat sich gezeigt, dass die erfindungsgemäß einzusetzenden 2-Komponenten-Beschichtungssysteme eine ausgezeichnete Haftung zu nahezu allen Grundierungen des Marktes aufweisen, insbesondere zu lösemittelfreien oder lösemittelarmen Grundierungen auf Polyurethan- und Epoxidharzbasis. Werden die Abdichtungssysteme im erfindungsgemäßen Verfahren in Kombination mit Abdichtungsbahnen auf Polyolefinbasis verwendet, können auch stark lösemittelhaltige Formulierungen als Primer und Haftvermittler eingesetzt werden, beispielsweise solche auf Basis chlorierter Polyolefine.

Das erfindungsgemäße Verfahren ermöglicht somit eine zuverlässige Abdichtung von Bauwerken im Innen- und Außenbereich, beispielsweise im Verbund mit Fliesen- und Plattenbelägen zur Abdichtung von Innenräumen gegen nichtdrückendes Wasser, sowie von Behältern gegen von innen drückendes Wasser im Innen- und Außenbereich. Derartige Verfahren sind national gemäß Bauregelliste A Teil 2, lfd. Nr. 2.50 und international gemäß ETAG 022 "Abdichtungen für Böden und Wände in Nassräumen" geregelt. Das erfindungsgemäße Verfahren ist insbesondere geeignet zur Abdichtung gegen drückendes und nicht drückendes Wasser bei Fundamenten, Terrassen, Balkonen, Flachdächern, Parkdecks, Tiefgaragen und/oder Betonsockeln, bei im wesentlichen horizontalen Bauwerksflächen wie Terrassen und Flachdächern insbesondere im Bereich von Aufkantungen. Das erfindungsgemäße Verfahren deckt somit die Bereiche der Bauwerksabdichtung nach DIN 18195 und der Dachabdichtung nach DIN 18531 in vollem Umfang ab.

Die nachfolgenden Beispiele sollen das Wesen der Erfindung näher erläutern, diese jedoch nicht einschränken.

### Patentbeispiele

### Allgemeine Herstellvorschrift für die Komponente A

Die Komponenten A1 und A4 werden in einem handelsüblichen Kreisdissolver bei Normaldruck und Umgebungstemperatur vorgelegt, die Bestandteile der Komponente A2 werden unter Rühren in beliebiger Reihenfolge zugegeben, anschließend wird bei erhöhter Dispergiergeschwindigkeit dispergiert, wobei sich die Mischung aufgrund der Scherkräfte auf 50 bis 55°C erwärmt. Man dispergiert 20 Minuten unter Luft- und Feuchtigkeitsauschluss und setzt dann die Komponenten A3, A5 und A6 bei niedriger Rührgeschwindigkeit zu. Die Mischung wird unter Feuchtigkeitsauschluss abgefüllt.

### Beispiel 1: (erfindungsgemäß)

### Komponente Ai:

- Komponente A1: 45 Gew-Teile Geniosil STPE 10, silanterminiertes Polypropylenglycol mit einer mittleren Molmasse (Mn) von 12000 g/mol und Endgruppen der Formel -O-C=O-NH-CH₂-SiCH₃(OCH₃)₂(Handelsprodukt der Wacker Chemie AG)
- Komponente A2: 19 Gew-Teile Martinal ON313S, Aluminiumhydroxid der Fa. Huber-Martinswerk GmbH, Bergheim, 18 Gew-Teile Omyacarb 2T-AV, gemahlene Kreide der Fa. Omya GmbH, Köln, 3 Gew-Teile Kronos 2310, Titandioxid Weißpigment der Fa. Kronos Europe. S.A., 1,5 Gew-Teile Aerosil R972, pyrogene Kieselsäure der Fa. Evonik Industries AG, Essen, 0,5 Gew-Teile Bayferrox 306, Eisenoxid-Schwarzpigment der Fa. Lanxess Deutschland GmbH, Köln
- Komponente A3: 1 Gew-Teil Geniosil GF 96, 3-Aminopropyltrimethoxysilan, Handelsprodukt der Fa. Wacker Chemie AG, Burghausen
- Komponente A4: 2,5 Gew-Teile Geniosil XL10, Vinyltrimethoxysilan, Handelsprodukt der Fa. Wacker Chemie AG, Burghausen
- Komponente A5: 1,5 Gew-Teile Irganox 1010, phenolisches Antioxidationsmittel der Fa. BASF SE, Ludwigshafen,1 Gew-Teil Tinuvin 384-2, Benzotriazol-UV-Absorber der Fa. BASF SE, Ludwigshafen, 3 Gew-Teile Tinuvin 123, HALS-Lichtstabilisator der Fa. BASF SE, Ludwigshafen
- Komponente A6: 8 Gew-Teile Hexadecyltrimethoxysilan, Dynasylan 9116, Handelsprodukt der Fa. Evonik Industries AG, Essen

Die Mischung hat eine rotationsviskosimetrisch bestimmte Viskosität von 12500 mPas bei 23°C.

### Beispiel 2: (erfindungsgemäß)

### Komponente Aii:

- Komponente A1: 35 Gew-Teile Geniosil STPE 10, silanterminiertes Polypropylenglycol mit einer mittleren Molmasse (Mn) von 12000 g/mol und Endgruppen der Formel -O-C=O-NH-CH₂-SiCH₃(OCH₃)₂ (Handelsprodukt der Wacker Chemie AG), 10 Gew-Teile Geniosil STPE 30, silanterminiertes Polypropylenglycol mit einer mittleren Molmasse (Mn) von 15000 g/mol und Endgruppen der Formel
- -O-C=O-NH-CH₂-SiCH₃(OCH₃)₂(Handelsprodukt der Wacker Chemie AG)
- Komponente A2: 21 Gew-Teile Martinal OL 104 LEO, Aluminiumhydroxid der Fa. Huber-Martinswerk GmbH, Bergheim, 10 Gew-Teile Omyacarb 2T-AV, gemahlene Kreide der Fa. Omya GmbH, Köln, 7 Gew-Teile Omyalite 95T, gemahlene Kreide der Fa. Omya GmbH, Köln, 2 Gew-Teile Fällungskreide, Hakuenka CCR-S der Fa. Shiraishi-Omya GmbH, Gummern, Österreich, 3 Gew-Teile Kronos 2310, Titandioxid Weißpigment der Fa. Kronos Europe. S.A., 0,5 Gew-Teile Bayferrox 306, Eisenoxid-Schwarzpigment der Fa. Lanxess Deutschland GmbH, Köln

- Komponente A3: 1 Gew-Teil Dynasylan DAMO, N-Aminoethyl-3-Aminopropyltrimethoxysilan, Handelsprodukt der Fa. Evonik Industries AG Essen
- Komponente A4: 3,5 Gew-Teile Geniosil XL70, Phenyltrimethoxysilan, Handelsprodukt der Fa. Wacker Chemie AG, Burghausen
- Komponente A5: 0,5 Gew-Teile Irganox 1076, phenolisches Antioxidationsmittel der Fa. BASF SE, Ludwigshafen,1 Gew-Teil Tinuvin 384-2, Benzotriazol-UV-Absorber der Fa. BASF SE, Ludwigshafen, 1,5 Gew-Teile Chimasorb 119, polymerer HALS-Lichtstabilisator der Fa. BASF SE, Ludwigshafen
- Komponente A6: 6 Gew-Teile Octyltrimethoxysilan, Dynasylan OCTMO, Handelsprodukt der Fa. Evonik Industries AG, Essen. 2 Gew-Teile Weichmacher Cyclohexandicarbonsäurediisononylester, Hexamoll DINCH der Fa. BASF SE, Ludwigshafen

Die Mischung hat eine rotationsviskosimetrisch bestimmte Viskosität von 17200 mPas bei 23°C.

### Beispiel 3: (erfindungsgemäß)

### Komponente Aiii:

- Komponente A1: 45 Gew-Teile Geniosil STPE 10, silanterminiertes Polypropylenglycol mit einer mittleren Molmasse (Mn) von 12000 g/mol und Endgruppen der Formel -O-CO-NH-CH₂-SiCH₃(OCH₃)₂(Handelsprodukt der Wacker Chemie AG)
- Komponente A2: 19 Gew-Teile Martinal ON313S, Aluminiumhydroxid der Fa. Huber-Martinswerk GmbH, Bergheim, 19 Gew-Teile Omyacarb 2T-AV, gemahlene Kreide der Fa. Omya GmbH, Köln, 3 Gew-Teile Kronos 2310, Titandioxid Weißpigment der Fa. Kronos Europe. S.A., 1,5 Gew-Teile Aerosil R972, pyrogene Kieselsäure der Fa. Evonik Industries AG, Essen, 0,5 Gew-Teile Bayferrox 306, Eisenoxid-Schwarzpigment der Fa. Lanxess Deutschland GmbH, Köln

- Komponente A3: 1 Gew-Teil Geniosil GF 96, 3-Aminopropyltrimethoxysilan, Handelsprodukt der Fa. Wacker Chemie AG, Burghausen
- Komponente A4: 2,5 Gew-Teile Geniosil XL10, Vinyltrimethoxysilan, Handelsprodukt der Fa. Wacker Chemie AG, Burghausen
- Komponente A5: 1,5 Gew-Teile Irganox 1010, phenolisches Antioxidationsmittel der Fa. BASF SE, Ludwigshafen,1 Gew-Teil Tinuvin 384-2, Benzotriazol-UV-Absorber der Fa. BASF SE, Ludwigshafen, 2 Gew-Teile Tinuvin 123, HALS-Lichtstabilisator der Fa. BASF SE, Ludwigshafen
- Komponente A6: 5 Gew-Teile Hexadecyltrimethoxysilan, Dynasylan 9116, Handelsprodukt der Fa. Evonik Industries AG, Essen, 3 Gew-Teile Weichmacher Acclaim 2200, Polypropylenglykol der Fa. Covestro AG, Leverkusen

Die Mischung hat eine rotationsviskosimetrisch bestimmte Viskosität von 14500 mPas bei 23°C.

### Beispiel 4: (nicht erfindungsgemäß)

Beispiel 1 wird wiederholt, aber als Komponente A6iv werden 8 Gew-Teile Weichmacher Cyclohexandicarbonsäurediisononylester, Hexamoll DINCH der Fa. BASF SE, Ludwigshafen eingesetzt

Die Mischung hat eine rotationsviskosimetrisch bestimmte Viskosität von 14200 mPas bei 23°C.

### Beispiel 5: (nicht erfindungsgemäß)

Beispiel 1 wird wiederholt, aber als Komponente A6v werden 6 Gew-Teile Weichmacher Trioctylphosphat, Disflamoll TOF der Fa. Lanxess Deutschland GmbH, Köln eingesetzt.

Die Mischung hat eine rotationsviskosimetrisch bestimmte Viskosität von 14100 mPas bei 23°C.

### Beispiel 6: (nicht erfindungsgemäß)

Beispiel 1 wird wiederholt, aber als Komponente A6vi werden 6 Gew-Teile eines langkettigen Alkylsulfonsäureesters des Phenols, Weichmacher Mesamoll der Fa. Lanxess Deutschland GmbH, Köln eingesetzt.

Die Mischung hat eine rotationsviskosimetrisch bestimmte Viskosität von 17500 mPas bei 23°C.

### Beispiel 7: (erfindungsgemäß)

Herstellung der Komponente Bi: 10g Dibutylzinnacetylacetonat werden mit 130g Triethylenglykol und 20g Wasser durch kräftiges Rühren vermischt. Es entsteht eine klare niedrigviskose Katalysatorlösung.

### Beispiel 8: (erfindungsgemäß)

Herstellung der Komponente Bii: 80g 8-Diazabicyclo [5.4.0] undec-7-en wird mit 60g Triethylenglykol und 20g Wasser durch kräftiges Rühren vermischt. Es entsteht eine klare, niedrigviskose Katalysatorlösung

### Beispiel 9: (erfindungsgemäß)

Herstellung der Komponente Biii: 80g Tetramethylguanidin werden mit 60g Isopropanol durch kräftiges Rühren vermischt. Es entsteht eine klare, niedrigviskose Katalysatorlösung

### Beispiel 10: (erfindungsgemäß)

Herstellung der Komponente Biv: 100g einer Zink-Amin-Komplexverbindung, K-Kat 670, Handelsprodukt der Fa. King Industries Inc, Norwalk USA werden mit 100g Tripropylenglykol und 15g Wasser durch kräftiges Rühren vermischt. Es entsteht eine klare, niedrigviskose Katalysatorlösung

### Aushärtungs- und Beschichtungsversuche

Jeweils 1000g der Komponente A aus den Beispielen 1 bis 6 werden durch intensives Rühren vermischt mit
30g Katalysatorlösung Bi aus Beispiel 7
30g Katalysatorlösung Bii aus Beispiel 8
50g Katalysatorlösung Biii aus Beispiel 9
30g Katalysatorlösung Biv aus Beispiel 10.

Auf einer größeren Polyethylenplatte werden durch Abkleben mit einem 3 mm starken geschäumten Klebeband Testflächen in der Größe von 30cm * 30 cm abgeklebt. In diese Testflächen werden jeweils 160g der reagierenden Massen unmittelbar nach dem Vermischen durch Verteilen mit einem Rakel gleichmäßig eingebracht. In die reagierende Masse wird ein Polyestervlies mit einem Flächengewicht von 110g/m² (Frankolon Vlies, der Firma Franken-Systems Gollhofen) eingelegt und vorsichtig angedrückt, so dass die Unterseite gleichmäßig von der reagierenden Masse benetzt ist. Danach werden weitere 160g der reagierenden Masse auf der Oberseite des Vlieses ausgebracht und mit einem Rakel gleichmäßig verteilt. Nach einer Härtungszeit von 90 Minuten kann die vliesarmierte Abdichtung rückstandslos von der Polyethylenplatte abgezogen werden. Die durchschnittliche Schichtstärke der so hergestellten vliesarmierten Abdichtung beträgt 2,2 +/- 0,1 mm.

### Kurzbewitterungsversuche

Die so hergestellten vliesarmierten Abdichtungen werden für 2 Wochen bei 23°C und 50% relativer Luftfeuchtigkeit gelagert und anschließend einer Kurzbewitterungsprüfung unterzogen. Hierfür werden aus den Prüfmustern mehrere Stücke in einer Größe von 50*100mm ausgeschnitten und in einem Kurzbewitterungsgerät Xeno-test Beta LM der Fa. Atlas bewittert. Die Bewitterung er folgt entsprechend der Norm DIN EN ISO 11341 und simuliert eine Freilandbewitterung. Dabei wechseln sich in einem Zyklus jeweils 12 min Regen und 108 min trockene Bewitterung ab. Das Bestrahlungsspektrum entspricht weitgehend dem des Sonnenlichtes, und die UV-Strahlung hat eine Stärke von ca. 60 W/mm². Im Kurzbewitterungsgerät herrschen eine Luftfeuchtigkeit von 40 bis 60 % und eine Temperatur von 38°C.

| | | | | | |
|---|---|---|---|---|---|
| Komp.A Bsp.1 | Komp.A Bsp.2 | Komp.A Bsp.3 | Komp.A Bsp.4 | Komp.A Bsp.5 | Komp.A Bsp.6 |
| Komp.B Bsp.7 | Komp.B Bsp.7 | Komp.B Bsp.7 | Komp.B Bsp.7 | Komp.B Bsp.7 | Komp.B Bsp.7 |
| >300 Tage | >300 Tage | >300 Tage | 260 Tage | 210 Tage | 210 Tage |
| Komp.A Bsp.1 | Komp.A Bsp.2 | Komp.A Bsp.3 | Komp.A Bsp.4 | Komp.A Bsp.5 | Komp.A Bsp.6 |
| Komp.B Bsp.8 | Komp.B Bsp.8 | Komp.B Bsp.8 | Komp.B Bsp.8 | Komp.B Bsp.8 | Komp.B Bsp.8 |
| >300 Tage | >300 Tage | >300 Tage | 260 Tage | 210 Tage | 210 Tage |
| Komp.A Bsp.1 | Komp.A Bsp.2 | Komp.A Bsp.3 | Komp.A Bsp.4 | Komp.A Bsp.5 | Komp.A Bsp.6 |
| Komp.B Bsp.9 | Komp.B Bsp.9 | Komp.B Bsp.9 | Komp.B Bsp.9 | Komp.B Bsp.9 | Komp.B Bsp.9 |
| >300 Tage | >300 Tage | >300 Tage | 260 Tage | 210 Tage | 210 Tage |
| Komp.A Bsp.1 | Komp.A Bsp.2 | Komp.A Bsp.3 | Komp.A Bsp.4 | Komp.A Bsp.5 | Komp.A Bsp.6 |
| Komp.B Bsp.10 | Komp. B Bsp.10 | Komp. B Bsp.10 | Komp.B Bsp.10 | Komp. B Bsp.10 | Komp.B Bsp.10 |
| >300 Tage | >300 Tage | >300 Tage | 260 Tage | 210 Tage | 210 Tage |

In der Tabelle sind die Anzahl der Tage im Kurzbewitterungsgerät angegeben, nach denen erste klebrige Stellen an der Oberfläche der vliesarmierten Abdichtungen beobachtet werden. Die Prüfergebnisse belegen klar den Zusammenhang zwischen Weichmachergehalt der Abdichtungen und Alterungsstabilität. Der Test wurde nach 300 Tagen beendet.

Im Falle der Kombination von 1000g Komponente A aus Beispiel 1 und 30 g Komponente B aus Beispiel 10 wurden die Zugeigenschaften vor und nach Kurzbewitterung als Mittelwert aus jeweils 5 Messungen bestimmt gemäß DIN EN ISO 527-1 'Kunststoffe - Bestimmung der Zugeigenschaften' bestimmt:

| | |
|---|---|
| Prüfgerät: | Universalprüfmaschine Fa. Zwick UPM 1445 |
| Prüfkörper: | Zugstab Typ 5B gem DIN EN ISO 527-2 |
| Kraftaufnehmer: | Kraftmessdose 2kN, Klasse 1 |
| Vorkraft: | 2N |
| Prüfgeschwindigkeit: | 200 mm/min |
| Prüftemperatur: | 23°C |
| vor Kurzbewitterung: | Höchstzugkraft 80,3 N, Dehnung bei Höchstzugkraft 63,7% |
| nach Kurzbewitterung: | Höchstzugkraft 74,9 N, Dehnung bei Höchstzugkraft 71,1% |

Die vergleichbaren der Zugeigenschaften vor und nach Kurzbewitterung belegen die gute Alterungs- und Bewitterungsstabilität der erfindungsgemäßen Beschichtungszusammensetzungen im erfindungsgemäßen Verfahren.

## Patentansprüche

1. 2-Komponenten-Beschichtungszusammensetzung zur Bauwerksabdichtung umfassend eine Komponente A und eine Komponente B, wobei die Komponente A zumindest umfasst:
A1) eine polymere Verbindung der Formel
Y-[O-C=O-NH-CH₂-Si-R1ₐ-R2₍₃₋ₐ₎]ₓ, wobei Y ein x-wertiger Polymerrest ist, wie er durch Entfernung der OH-Gruppen aus einem Polyetherpolyol entsteht und R1 eine Methylgruppe ist und R2 eine Methoxy- oder Ethoxygruppe ist und a gleich 0 oder 1 ist;
A2) anorganische und/oder organische Füllstoffe;
A3) Verbindungen, mit mindestens einer primären und/oder sekundären und/oder tertiären Aminogruppe und mit mindestens einer Alkoxysilylgruppe;
A4) Verbindungen der Strukturformel Rₓ-Si(OCH₃)₃, wobei Rₓ eine Vinyl- oder Phenylgruppe oder ein aus aus diesen Verbindungen abgeleitetes Oligomerisierungsprodukt ist;
A5) Alterungsschutzmittel;
und wobei die Komponente B zumindest einen flüssigen Katalysator ausgewählt aus der Gruppe der
B1) organischen Zinnverbindungen, und/oder
B2) organischen Titanverbindungen, und/oder
B3) Amine, und/oder
B4) Amidine, und/oder
B5) Guanidine
zur Beschleunigung der Silanpolykondensation umfasst.

2. 2-Komponenten-Beschichtungszusammensetzung nach Anspruch 1, wobei die Komponente A zusätzlich Formulierungshilfsmittel umfasst.

3. 2-Komponenten-Beschichtungszusammensetzung nach Anspruch 1 oder 2, wobei die Komponente A als Formulierungshilfsmittel ein organisches Lösemittel mit einem Anteil von maximal 5 Gew% bezogen auf das Gesamtgewicht der Komponenten A und B umfasst.

4. 2-Komponenten-Beschichtungszusammensetzung nach einem der vorangehenden Ansprüche, wobei die Komponente A als Formulierungshilfsmittel einen Weichmacher mit einem Anteil von maximal 5 Gew% bezogen auf das Gesamtgewicht der Komponenten A und B umfasst.

5. 2-Komponenten-Beschichtungszusammensetzung nach einem der vorangehenden Ansprüche, wobei die Komponente A als Formulierungshilfsmittel einen reaktiven Verdünner umfasst.

6. 2-Komponenten-Beschichtungszusammensetzung nach einem der vorangehenden Ansprüche, wobei die Komponente A als Formulierungshilfsmittel ein flüssiges Silikonharz umfasst.

7. 2-Komponenten-Beschichtungszusammensetzung nach einem der vorangehenden Ansprüche, wobei a = 1 und wobei R2 eine Methoxygruppe ist.

8. 2-Komponenten-Beschichtungszusammensetzung nach einem der vorangehenden Ansprüche, wobei die Komponente B Wasser umfasst.

9. 2-Komponenten-Beschichtungszusammensetzung nach Anspruch 8, wobei die Komponente B mindestens einen ein- oder mehrwertigen Alkohol umfasst.

10. 2-Komponenten-Beschichtungszusammensetzung nach einem der vorangehenden Ansprüche, aufweisend ein Mischungsverhältnis A:B zwischen 500:1 und 50:1.

11. Verfahren zur Bauwerksabdichtung umfassend den Verfahrensschritt der Applikation einer 2-Komponenten-Beschichtungszusammensetzung gemäß einem der vorangehenden Ansprüche in Kombination mit einem Textil.

12. Verfahren nach Anspruch 11, wobei Dehn- und/oder Arbeits- und/oder Sollrissfugen im Betonbau ausgebildet werden.

13. Verfahren nach Anspruch 11, wobei die 2-Komponenten-Beschichtungszusammensetzung innerhalb einer Zeit zwischen 50 und 70 Minuten aushärten.

14. Verfahren nach Anspruch 11 oder 12, wobei keine Grundierung vor der Applikation der 2-Komponenten-Beschichtungszusammensetzung erfolgt.
